# EUROPEAN PATENT APPLICATION

(11) **EP 0 749 078 A1**
(43) Date of publication of application: **18.12.1996**
(21) Application number: 95942296.5
(22) Date of filing: 27.12.1995
(51) Int. Cl.: G06F 17/60

(54) **CERTIFYING SYSTEM AND TRANSACTION SYSTEM WITH THE CERTIFICATION**

(30) Priority: 28.12.1994 JP 337673/94; 16.03.1995 JP 83529/95
(71) Applicant: KABUSHIKI KAISYA ADVANCE, Chuo-ku Tokyo 103 (JP)
(72) Inventor: WATANABE, Shinichirou, Koto-ku, Tokyo 136 (JP)
(74) Representative: Rinuy, Santarelli
(86) International application number: JP9502739
(87) International publication number: WO9620452

(57) **Abstract**

An optional information supplied from an authenticating equipment (1) or an agreement settled between an equipment (5) to be authenticated and the authenticating equipment is stored in a tamper-proof region in the data stored in the equipment to be authenticated during a predetermined period. A return data including the optional information, a data based on the optional information, or the data based on the agreement are supplied from the equipment to be authenticated to the authenticating equipment. Thereby a rightful user is authenticated, and a network usable by the rightful user based on the authentication is established, so that a suitable authentication and an exclusive single goods or services transaction can be executed.

## Description

### TECHNICAL FIELD

The present invention relates to a system of authentication, more particularly to a system of authentication for goods or services transactions and to a system of transactions incorporating such an authentication system.

### BACKGROUND ARTS

A system using a personal computer communication network is considered in which a user utilizes this network to purchase goods or download charged software and a communication center carries out automatic deduction from the account of the user in correspondence with the payment for the purchase through or not through a credit sales company. There exist needs, concerning the process of paying the charges or transferring the goods, for a safe system having means for confirming a true user and means for ensuring a rightful transaction by the true user. Nevertheless, no such safe system has ever been successfully constituted.

### DISCLOSURE OF THE INVENTION

According to the present invention there are provided a system of authentication and a system of transactions incorporating an authentication system for goods or services transactions, in which tamper-proof secret regions are provided in the data stored in an equipment to be authenticated, an optional information supplied from an authenticating equipment to an equipment to be authenticated or an agreement settled between an authenticating equipment and an equipment to be authenticated is stored during a predetermined period in the tamper-proof regions, and return data including such optional data, data based on such optional data, or data based on such agreement is supplied to the authenticating equipment.

According to the present invention there is also provided a system of authentication in which a secret algorithm is stored in an authenticating equipment, an intrinsic identifier of its own, a secret algorithm, and an intrinsic identifier of the authenticating equipment are stored in an equipment to be authenticated, in a process of authentication the identifier of the authenticating equipment is applied to a secret algorithm of its own to produce an information possessed in common with the authenticating equipment on the side of the equipment to be authenticated, and in a process of authentication the identifier supplied by the equipment to be authenticated or acquired indirectly is applied to a secret algorithm of its own to produce an information possessed in common with the equipment to be authenticated on the side of the authenticating equipment.

In the system of the present invention, when the system is applied to a personal computer communication network for the sale of software, in which a user downloads software which the user wishes to purchase, and the communication network center (a communication center) deducts the price of the purchased software from the account through a bank or a credit sales company which the user has previously registered at the communication center, it is possible to prevent an unauthorized user from purchasing software.

In the system of the present invention, when the system is applied to a transaction between a supplier of goods or services (authenticating equipment) and a receiver of goods or services (an equipment to be authenticated), an optional information such as a random number is supplied to the user, the user stores the supplied optional information in a tamper-proof or secret region in the stored data, a return data is transmitted to the goods or service supplier, the return data is compared with the optional information, and the transaction is decided as rightful only when the compared data coincide or substantially coincide. Thus, it is possible to exclude transactions involving duplicate supplies of unauthorized goods or services, and accordingly to realize an exclusive single goods or services transaction.

The equipment to be authenticated is located on the side of, for example, a user who purchases goods or services and pays the charges of the goods or services. The authenticating equipment is located on the side of, for example, a seller who sells goods or services, a claimant of the payment for the charge, or an agent of the claimant. However, the situation is not limited to these examples, but may cover the locations of the sides of the persons related to the goods and services transaction.

Users connected to the equipment to be authenticated in the system of the present invention may include a user who possesses, by purchase or lease, a portable or fixed apparatus having storage devices such as an integrated circuit card, a magnetic card, a floppy disk, an optical magnetic disc, a compact disk read only memory: CDROM, and the like.

A temporary period or a predetermined period connected to the period during which an information or an agreement is stored in some portion of the system of the present invention may be, for example, a period from the occurrence of necessity for an authentication to the completion of the authentication, or a period from the commencement of goods or services transaction to the completion of the payment of the charge. However, the situation is not limited to these examples, but may cover various periods.

An optional information supplied from the authenticating equipment to the equipment to be authenticated may include, for example, voluntary data, random number data, an algorithm, and the like made by the authenticating equipment. However, the optional information is not limited to these examples, but may include any information made voluntarily by the authenticating equipment.

A tamper-proof or secret region is a region of which the equipment to be authenticated has no knowledge of the content, the existence, or the location of such region, or a region where the equipment to be authenticated cannot tamper with the content of such a region. A tamper-proof region is constituted mostly by a memory device and the like. However, the tamper-proof region is not limited to these examples, but may be other kinds of device which perform similar functions. The meaning of the expression "tamper-proof" includes, for example, the physical impossibility of replacing the content or a substantial impossibility of replacing the content because of the instability or very short life of the replaced state after the replacement. An agreement preliminarily settled between the equipment to be authenticated and the authenticating equipment is, for example, an agreement that the data, which are synchronized necessarily between the equipment to be authenticated and the authenticating equipment and represent the date and time of the execution of the authentication, are used as a return data. However, the agreement is not limited to this example, but may be other kinds of agreement.

Preferably, the process of an authentication is started from the state where each side possesses a code which is common to both parties. Such common code is, for example, an encryption key, and the KPS (key predistribution system) is preferable for such possession of the encryption key as the common code, from the viewpoint of the ease of the procedure and of increasing the number of the subscribers on the network. To execute an authentication between the equipment to be authenticated and the authenticating equipment, the use of the common code as the encryption key and the communication of data therebetween by using encrypted data is effective and advantageous.

The KPS system is a system in which an intrinsic algorithm of its own is applied to the identifier of the equipment of the other party to produce a key common with the equipment of the other party. The formation of a secret algorithm and the like is carried out mainly in the communication center equipment. The formed center algorithm is possessed exclusively by the communication center equipment. A secret algorithm exclusively possessed by both parties is formed by applying the identifier of the user equipment as the equipment to be authenticated, a software, or the identifier of the supplier of goods or services as the authenticating equipment.

The formation of the communication center algorithm, the formation of the secret algorithm, the formation of the commonly possessed encryption key, the definition of an entity and an identifier, and the method and content concerning the process to form an encryption key are described, for example, in Japanese Unexamined Patent Publication Nos. 63-36634 and 63-107667.

Preferable methods for applying an identifier to a secret algorithm is described also, for example, in the article: Matsumoto, Takashima, and Imai, "Formation of Simplified Type Unidirectional Algorithm", Singakugiho (Technical Research Report of the Institute of Electronics, Information, and Communication Engineers of Japan) IT89-23, July, 1989. The operation of the communication center may be carried out by a user equipment as the equipment to be authenticated, by a supplier of goods or services as the authenticating equipment, or the combination of both parties. Hereinbefore, only a preferable method of using a key has been described. However, other methods may be used. For the encryption algorithm, available encryption algorithms such as, for example, the DES (data encryption standard), the FEAL (fast data encipherment algorithm) (registered trademark), and the like may be used.

By using the technique according to the present invention, it is possible to suitably authenticate a rightful user, to establish a network usable by the rightful user based on the authentication, and to execute a suitable authentication and a suitable exclusive single transaction of goods or services.

### BRIEF DESCRIPTION OF THE DRAWINGS

Figure 1 shows a general configuration of a transaction system to which a system according to the present invention is applied;
Figs. 2A and 2B show a system according to an embodiment of the present invention;
Figs. 3A, 3B, 4A, 4B, 5A, 5B, 6A, 6B, 7A and 7B show the other systems according to the other embodiments of the present invention; and
Figs. 8A, 8B and 8C show an example of the accounting operation in the system according to the present invention.

### BEST MODES FOR EMBODYING THE INVENTION

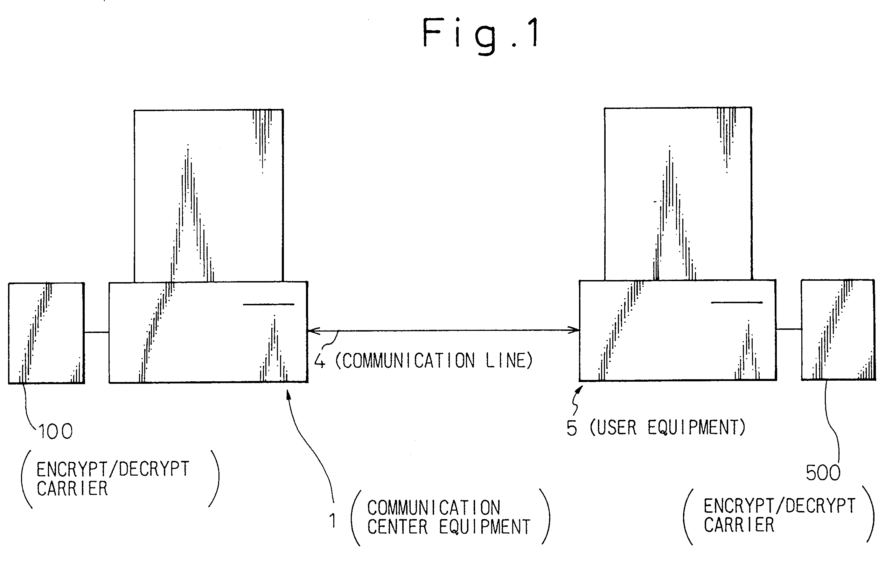

The general form of a transaction system to which the system of the present invention is applied is shown in Fig. 1. A communication center equipment 1 receives a subscription request for the network from a user equipment 5, and then supplies a tamper-proof KPS encrypt/decrypt carrier including a secret algorithm which is specific to each user to the user equipment. Each of the communication center equipment and the user equipment connects such a carrier to an information terminal device such as a personal computer connected to the network. When the user equipment sends a request to purchase a charged information or goods through the network, the communication center carries out an authentication of the user by using a tamper-proof KPS encrypt/decrypt carrier including the secret algorithm of the communication center equipment, the common key produced exclusively in the carrier for the user equipment and the carrier for the communication center equipment, and means which will be described hereinafter in detail.

The production and the inputting of a secret algorithm which is specific for each KPS encrypt/decrypt carrier may be carried out in any suitable location, such as in the communication center equipment, an exclusive center where the production and the inputting of the secret algorithm is carried out, or an equipment which produces the KPS encrypt/decrypt carrier. Instead of the KPS encrypt/decrypt carrier, software such as a program which can be executed in the information terminal device possessed by the user equipment may be used.

The technique of the system according to the present invention may be applied to not only an accounting operation but also operations which require the authentication of the opposite party (user equipment) such as an access control in the CUG (closed user group) in a personal computer communication service, a safe with an electronic lock, and the like.

An example of the preparations prior to the authentication is that,
first, the user registers with the communication center the personal information (Pda) for the account, such as the password, the bank name, the account number, and the name;
second, the communication center equipment prepares the KPS encrypt/decrypt carrier in which the secret algorithm Xc exclusive for the communication center is stored; and
third, the communication center supplies each user equipment with the KPS encrypt/decrypt carrier in which the secret algorithm exclusive for each user equipment is stored.

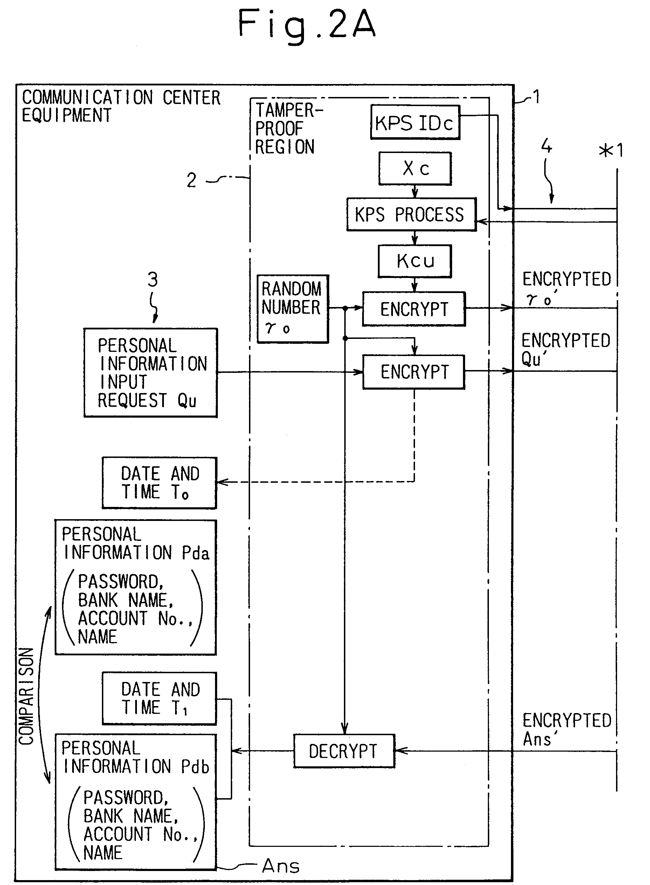

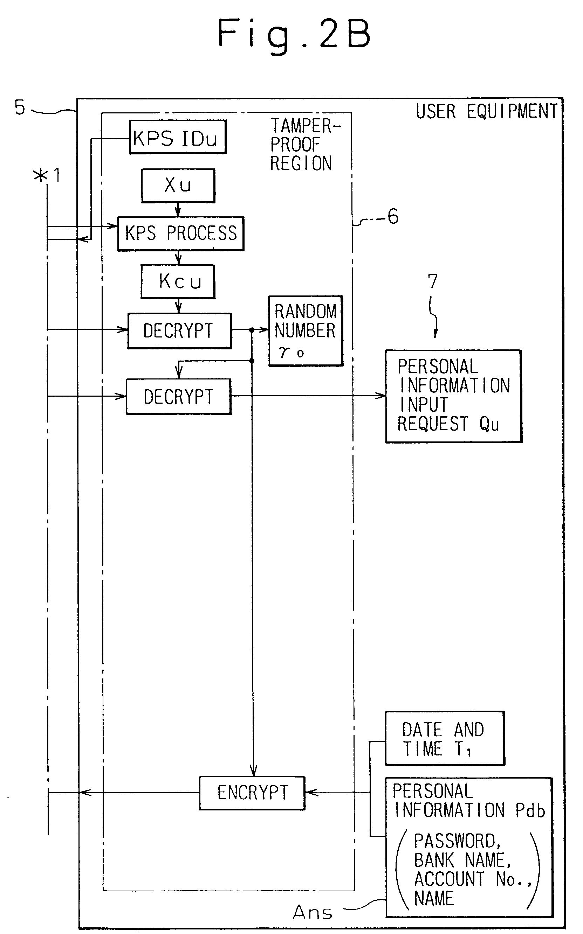

A system according to an embodiment of the present invention is shown in Fig. 2. The tamper-proof region 2 enclosed by a chain line included in the communication center equipment 1 is a region of the data that cannot be altered or tampered with. The tamper-proof region 6 enclosed by a chain line included in the user equipment 5 is a region of the data that cannot be altered or tampered with. The control of the calculation elements used in the KPS encrypt/decrypt carrier is subjected to a preliminarily input program, and the manner of this control cannot be altered from outside. The operations of the system of Fig. 2 are as follows.

First, the user equipment supplies the communication center equipment with the user identifier (KPSIDu), and the communication center equipment supplies the user equipment with the communication center identifier (KPSIDc);
second, each of the user equipment and the communication center equipment produces the common key (Kcu) by the KPS process with the application of the identifier (KPSID) of the opposite party to the secret algorithm of its own;
third, the communication center equipment generates a random number r₀ for each communication, encrypts the random number by the common key (Kcu) to produce an encrypted random number (r₀'), and the encrypted random number is sent to the user equipment. The user equipment decrypts the encrypted random number by the common key (Kcu) to produce the random number r₀;
fourth, the communication center encrypts an input request, i.e., a question sentence (Qu) for a personal information (Pda) such as password, bank name, account number, and name by the random number r₀ to produce the encrypted input request (Qu'), and temporarily stores the date and time (T₀) of the transmission as a time stamp;
fifth, the user equipment decrypts the encrypted input request Qu' by the random number r₀ to produce (Qu), confirms the decrypted data, inputs an answer (Pdb) for the personal information input request such as password, bank name, account number, and name, inputs the date and time (T₁) of the inputting, to produce an answer data Ans, encrypts the answer data to produce the encrypted answer data (Ans'), and transmits the encrypted answer data to the communication center equipment; and
sixth, the communication center equipment decrypts the encrypted answer data Ans' by the random number r₀ to produce (Ans) to produce the personal information (Pdb) and the date and time (T₁), decides whether or not the produced Pdb and T₁ coincide with the preliminarily registered Pda and the stored T₀ by a comparison, and decides as an authorized user equipment only when they coincide. Preferably, allowances are given to T₀ or T₁, since some delay can occur between T₀ and T₁.

The dates and times, T₀ and T₁, are used for preventing the repeated use of the encrypted data, r₀', Qu', and Ans'. Alternatively, any data which varies in synchronization between the communication center equipment and the user equipment may be used in place of the data and time.

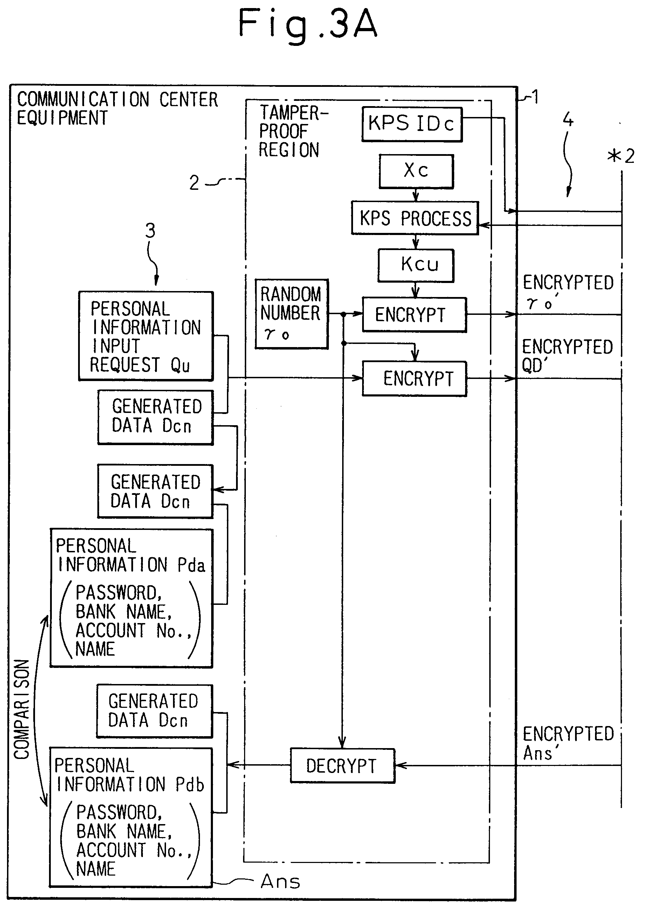

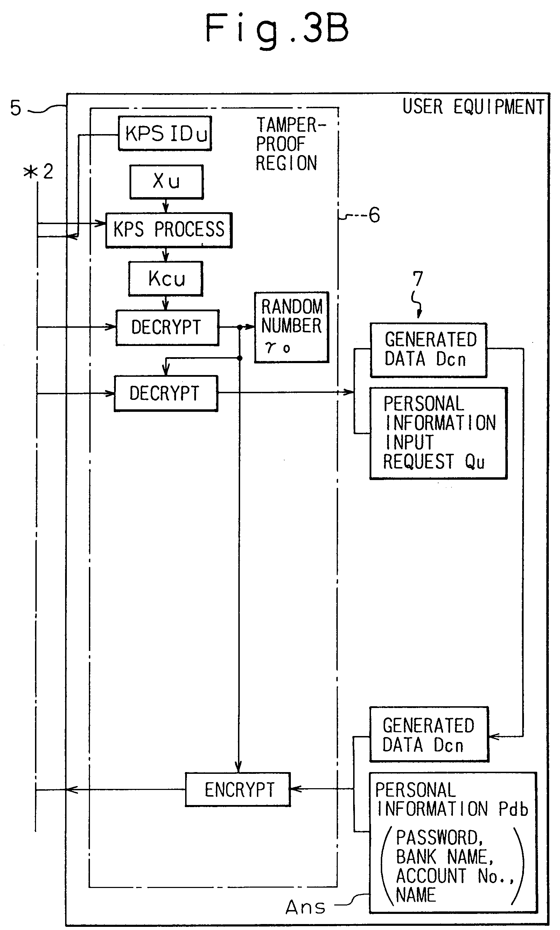

A system according to another embodiment of the present invention is shown in Figs. 3A and 3B. The system of Figs. 3A and 3B is preferable in the case where the data which varies in synchronization between the communication center equipment and the user equipment is not available.

The operations of the system of Figs. 3A and 3B will be described.

First, the user equipment 5 transmits the identifier (KPSIDu) of the user equipment to the communication center equipment, the communication center equipment 1 transmits the identifier (KPSIDc) to the user equipment;
second, each of the user equipment and the communication center equipment produces a common key (Kcu) by the KPS process by applying the identifier (KPSID) of the opposite party to the secret algorithm of its own;
third, the communication center equipment generates a random number r₀ for each communication, encrypts the random number by the common key (Kcu) to produce the encrypted random number (r₀'), and transmits the encrypted random number to the user equipment, and the user equipment decrypts r₀' by the common key (Kcu) to produce the random number r₀;
fourth, the communication center equipment encrypts an input request (Qu) for the personal information (Pda) such as password, bank name, account number, name, and the like and the data (Dcn) generated in the communication only for each communication by the random number r₀ to produce the encrypted data (QD') and transmits the encrypted data to the user equipment;
fifth, the user equipment decrypts the encrypted data QD' by the random number r₀ to produce Qu and Dcn, temporarily stores Dcn, confirms Qu by the display, inputs an answer (Pdb) for the input request for the personal information such as password, bank name, account number, name, and the like, inputs the temporarily stored Dcn, to produce the data Ans, encrypts the data by the random number r₀ to produce the encrypted data (Ans'), and transmits the encrypted data to the communication center; and
sixth, the communication center equipment decrypts the data Ans' by the random number to produce the data (Ans) consisting of the personal information (Pdb) and the generated data Dcn, decides whether or not these Pdb and Dcn coincide with the stored Pda and the previous Dcn by a comparison, and decides that the user is an authorized user only when they coincide.

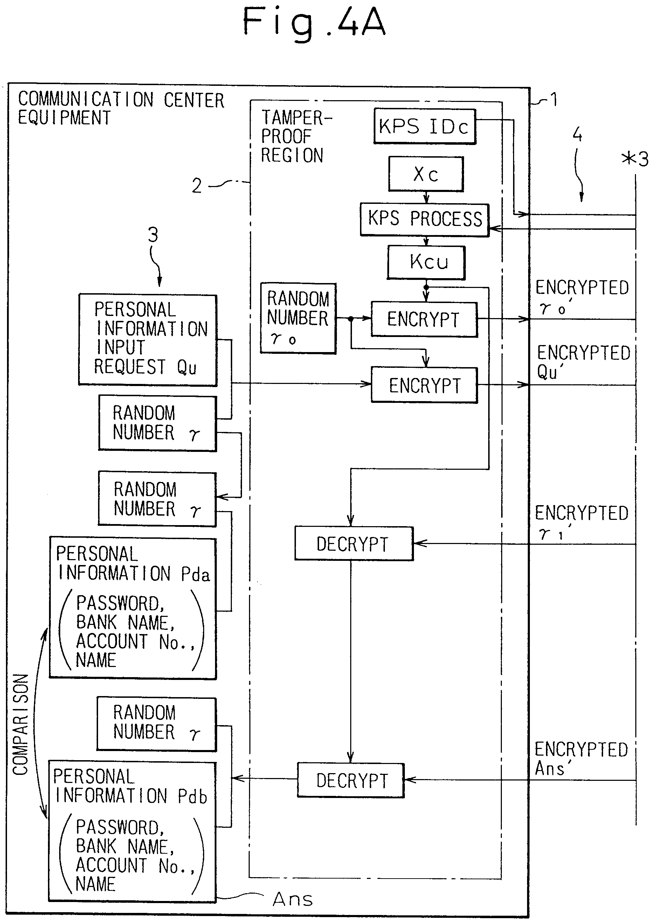

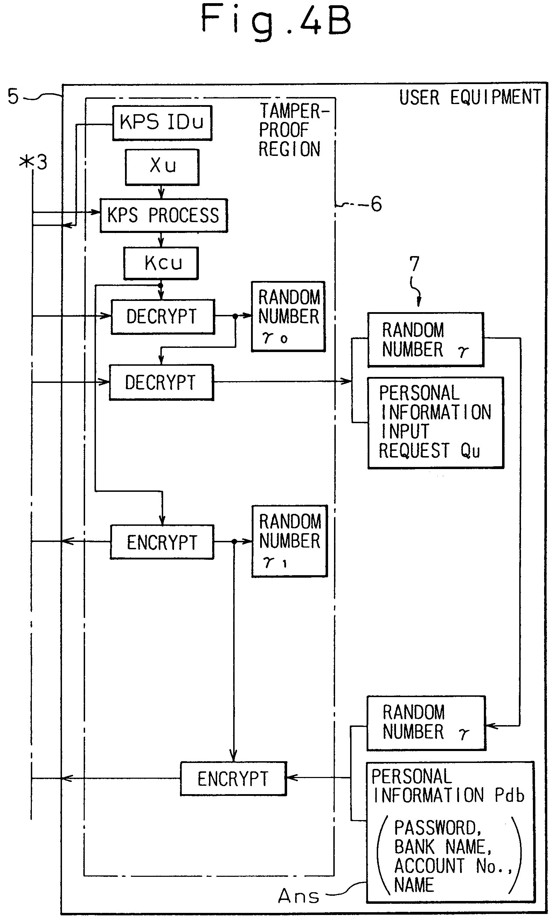

A system according to another embodiment of the present invention is shown in Figs. 4A and 4B. The system of Figs. 4A and 4B is preferable in the case where it is not possible to provide the data which is generated for each communication between the communication center equipment and the user equipment and the data is not repeatedly available.

The operations of the system of Figs. 4A and 4B will be described.

First, the user equipment 5 transmits the identifier (KPSIDu) of the user equipment to the communication center equipment and the communication center equipment 1 transmits the identifier (KPSIDc) to the user equipment;
second, each of the user equipment and the communication center equipment produces a common key (Kcu) by the KPS process by applying the identifier (DPSID) of the opposite party to the secret algorithm of its own;
third, the communication center equipment generates a random number r₀ for each communication, encrypts the random number by the common key (Kcu) to produce the encrypted random number (r₀'), and transmits the encrypted random number to the user equipment, and the user equipment decrypts r₀' by the common key (Kcu) to produce the random number r₀;
fourth, the communication center equipment encrypts an input request for the personal information (Pda) and the random number r for each communication by the random number r₀ to produce the encrypted data (Qu'), and the encrypted data is transmitted to the user equipment;
fifth, the user equipment decrypts the encrypted data Qu' by the random number r₀ to produce Qu and r, and temporarily stores Qu and r;
sixth, the user equipment generates the random number r₁ for each communication, and encrypts the generated random number by the common key (Kcu) to produce the encrypted random number (r₁'), and transmits r₁' to the communication center equipment, and the communication center equipment decrypts r₁' by the common key (Kcu) to produce the random number r₁;
seventh, the user equipment inputs the answer (Pdb) for the input request for the personal information, inputs the random number r, encrypts the input answer and the input random number to produce the encrypted answer (Ans'), and the encrypted answer is transmitted to the communication center equipment; and
eighth, the communication center equipment decrypts the encrypted Ans' by the random number r₁ to produce the personal information (Pdb) and the random number r, decides whether or not the produced Pdb and r₁ coincide with the stored Pda and temporarily stored random number r by a comparison, and decides that the user is an authorized user equipment only when they coincide.

The personal information Pda and Pdb may be used in various systems, including an accounting system, which require authentication, if the decision of coincidence by comparison is not carried out in the communication center equipment. The input request for the personal information from the communication center equipment and the personal information supplied from the user equipment may be replaced by various kinds of other data.

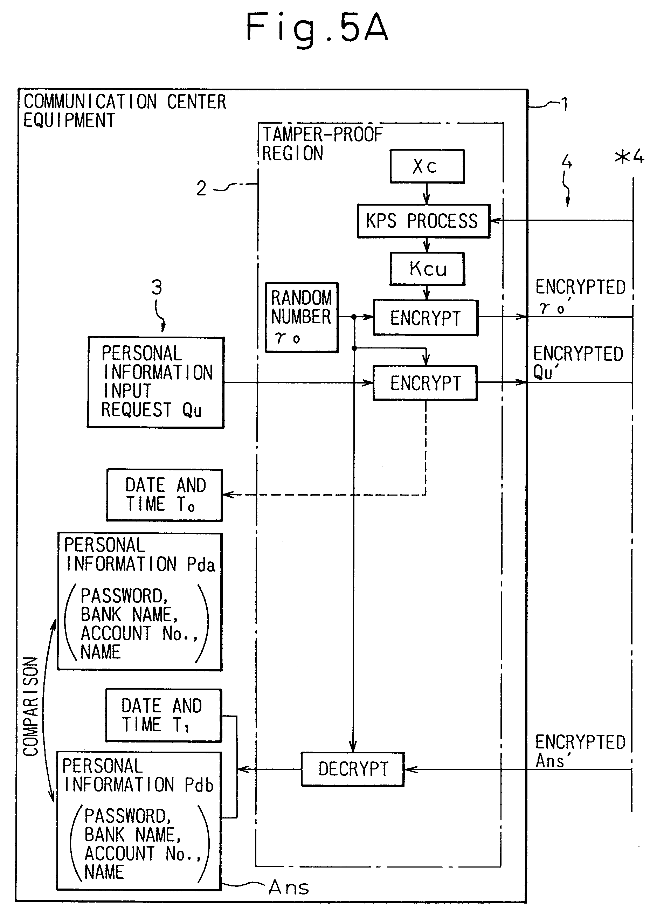

The systems according to further embodiments of the present invention are shown in Figures 5A and 5B; 6A and 6B; and 7A and 7B, respectively.

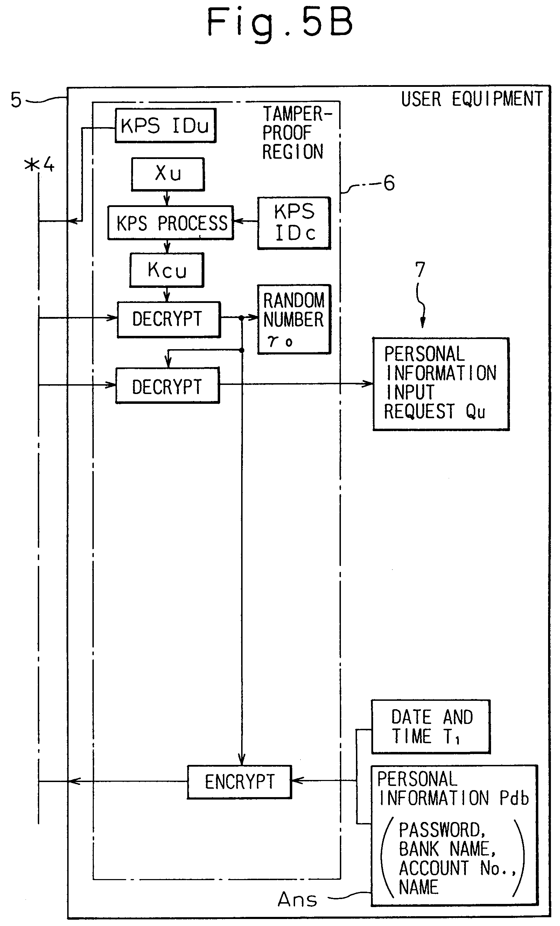

The operations of the system of Figs. 5A and 5B will be described.

First, the user equipment 5 transmits the user equipment identifier (KPSIDu) to the communication center equipment 1;
second, each of the user equipment and the communication center equipment produces the common key (Kcu) by the KPS process by applying the identifier (KPSID) of the opposite party to the secret algorithm of its own;
third, the communication center equipment generates a random number r₀ for each communication, encrypts the random number by the common key (Kcu) to produce (r₀'), transmits the encrypted random number r₀' to the user equipment, and the user equipment decrypts the r₀' by the common key (Kcu) to produce the random number r₀;
fourth, the communication center equipment encrypts an input request, i.e., the question sentence (Qu) for the personal information (Pda) such as a password, a bank name, an account number, a name, and the like by the random number r₀, to produce (Qu'), and the encrypted data Qu' is sent to the user equipment. The communication center equipment stores temporarily the date and time (T₀) as a time stamp;
fifth, the user equipment decrypts the encrypted data Qu' by the random number r₀ to produce the data (Qu), confirms by display the data Qu, inputs an answer (Pdb) for the input request for the personal information such as a password, a bank name, an account number, a name, and the like, inputs the date and time (T₁), to form the data Ans, encrypts the data to produce the encrypted data (Ans'), and transmits the encrypted data to the communication center equipment;
sixth, the communication center equipment decrypts the encrypted Ans' by the random number r₀ to produce the data (Ans) including the personal information (Pdb) and the date and time (T₁), decides by a comparison whether or not the personal information Pdb and the date and time T₁ coincide with the stored Pda and T₀, and decides that the user is an authorized user equipment only when they coincide. Preferably, allowances are given to T₀ or T₁, since some delay can occur between T₀ and T₁.

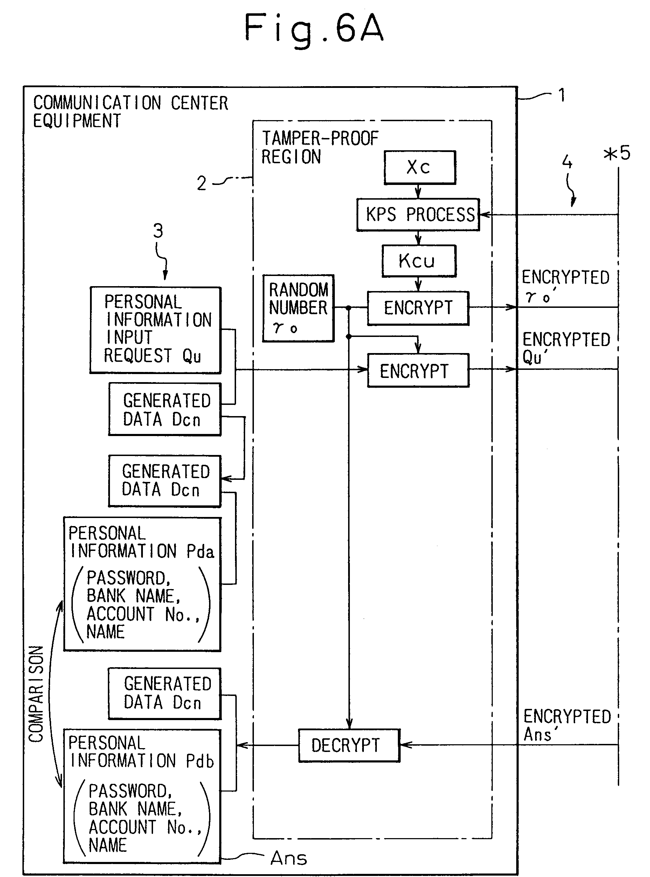

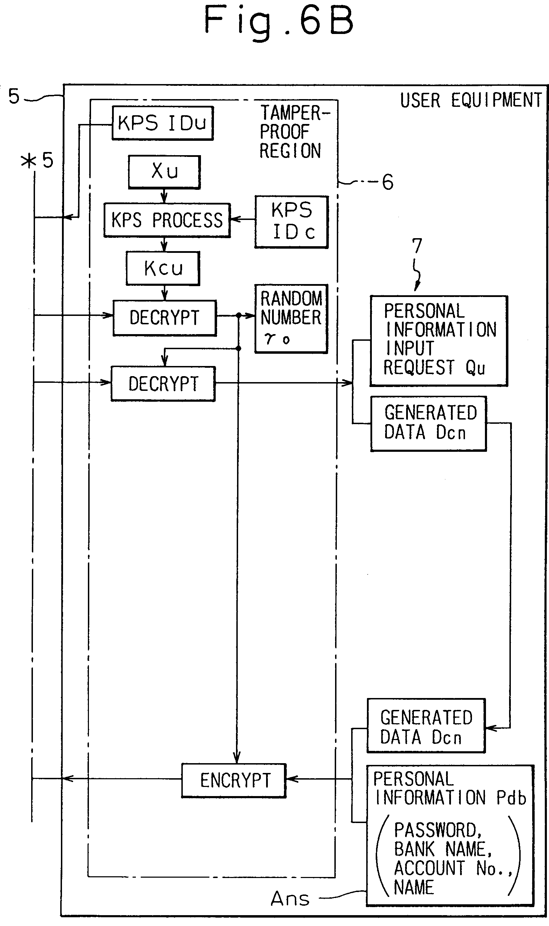

The operations of the system of Figs. 6A and 6B will be described.

First, the user equipment 5 transmits the user equipment identifier (KPSIDu) to the communication center 1;
second, each of the user equipment and the communication center equipment produces the common key (Kcu) by the KPS process by applying the identifier (KPSID) of the opposite party to the secret algorithm of its own;
third, the communication center equipment generates a random number r₀ for each communication, encrypts the random number by the common key (Kcu) to produce (r₀'), transmits the encrypted random number r₀, to the user equipment, and the user equipment decrypts the encrypted random number r₀' by the common key (Kcu) to produce the random number r₀;
fourth, the communication center equipment encrypts an input request, i.e., the question sentence (Qu) for the personal information (Pda) including a password, a bank name, an account number, a name, and the like, and a data (Dcn) generated for each communication in the communication center equipment, by the random number r₀ to produce the encrypted data (QD'), and transmit the encrypted data to the user equipment;
fifth, the user equipment decrypts the encrypted data QD' by the random number r₀ to produce the data Qu and Dcn, temporarily stores Dcn, confirms Qu by the display, inputs an answer (Pdb) of the input request for the personal information including password, bank name, account number, name, and the like, inputs the temporarily stored Dcn, to produce a data Ans, encrypts the data to produce the encrypted (Ans'), and transmits the encrypted data to the communication center equipment;
sixth, the communication center equipment decrypts the encrypted Ans' by the random number r₀ to produce the data (Ans) including the personal information (Pdb) and the data Dcn, decides by a comparison whether or not the personal information Pdb and the data Dcn coincide with the stored Pda and Dcn, and decides that the user is an authorized user equipment only when they coincide.

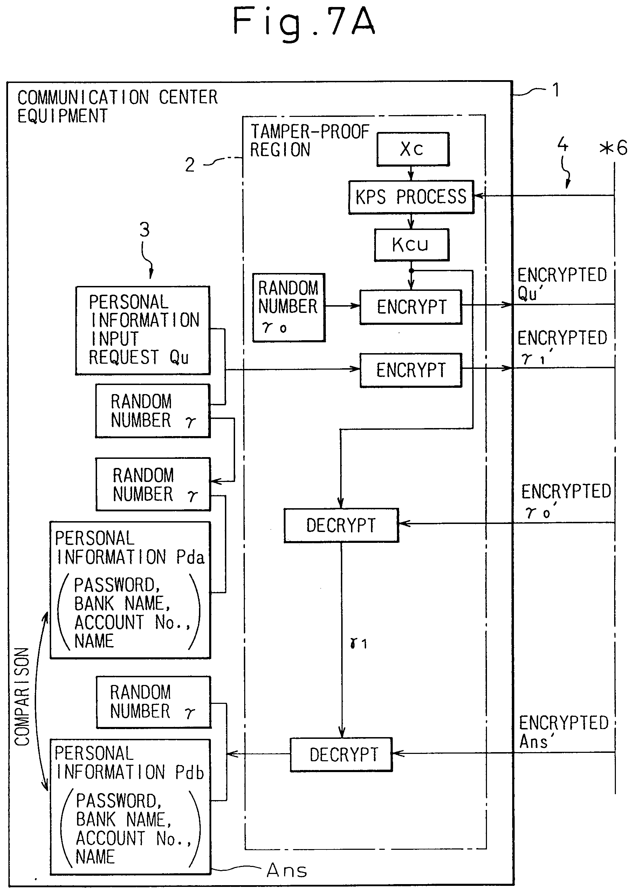

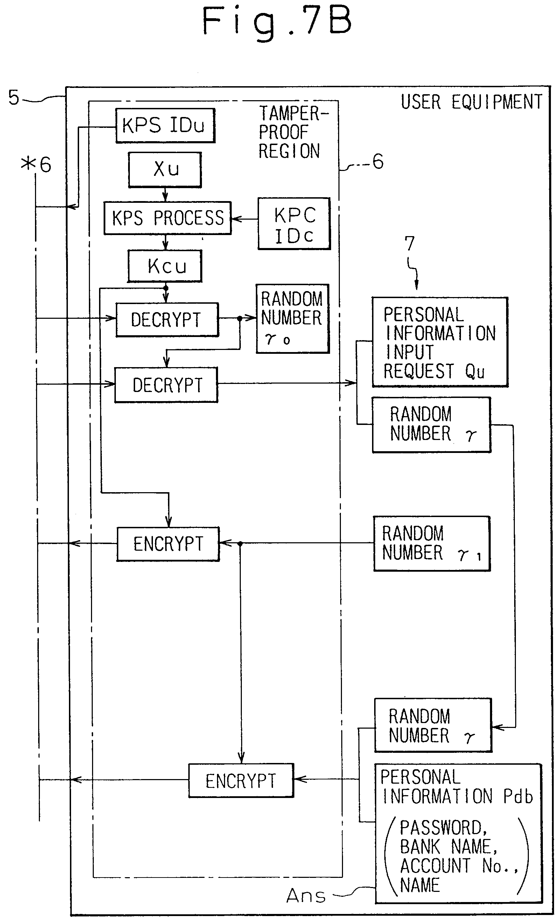

The operations, of the system of Figs. 7A and 7B will be described. The system of Figs. 7A and 7B is preferable in the case where it is not possible to provide data which is exclusive for each communication and is not repeatedly available.

First, the user equipment 5 transmits the identifier (KPSIDu) of the user equipment;
second, each of the user equipment and the communication center equipment produces, by the KPS process, the common key (Kcu) by applying the identifier (KPSID) of the opposite party to the secret algorithm of its own;
third, the communication center equipment generates a random number r₀ for each communication, encrypts the random number by the common key (Kcu) to produce the encrypted key (r₀'), and transmits the encrypted key to the user equipment, and the user equipment decrypt the encrypted key r₀' by the common key (Kcu) to produce the random number r₀;
fourth, the communication center encrypts an input request for the personal information (Pda) and a random number r for each communication to produce the encrypted data (Qu'), and transmit the encrypted data to the user equipment;
fifth, the user equipment decrypts the encrypted data Qu' by the random number r₀, and stores temporarily the decrypted data Qu and random number r;
sixth, the user equipment generates a random number r₁ for each communication, encrypts the random number by the common key (Kcu), to produce (r₁'), and transmits the encrypted random number r₁' to the communication center equipment, and the communication center equipment decrypts the encrypted random number by the common key Kcu to produce the random number r₁;
seventh, the user equipment inputs an answer data (Pdb) for the input request for the personal information, inputs, the random number r, encrypts the input data by the random number r₁ to produce the encrypted data Ans', and transmits the encrypted data to the communication center equipment; and
eighth, the communication center equipment decrypts the encrypted data Ans' by the random number r₁ to produce the personal information (Pdb) and the random number r, decides by a comparison whether or not the personal information Pdb and the random number r coincide with the stored Pda and random number r, and decides that the user is an authorized user equipment only when they coincide.

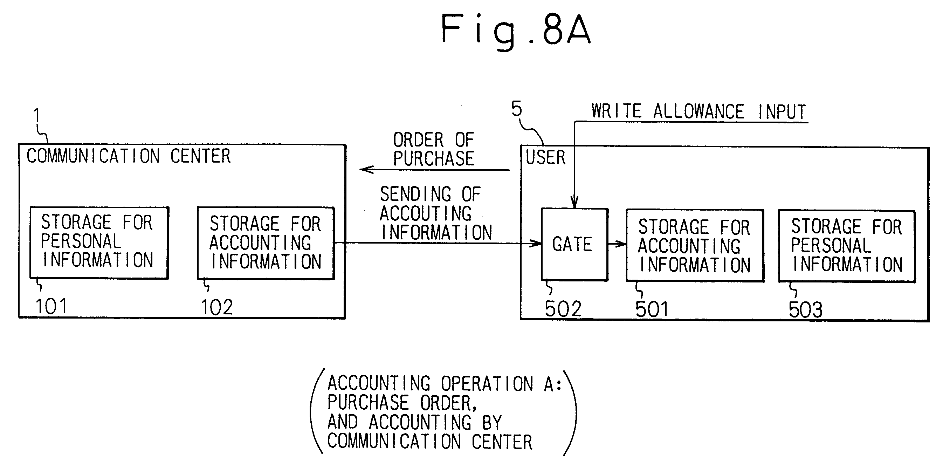

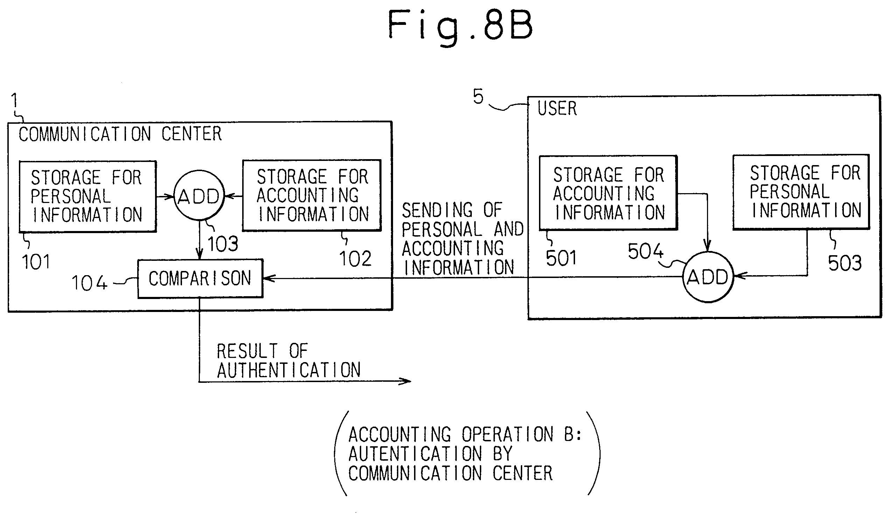

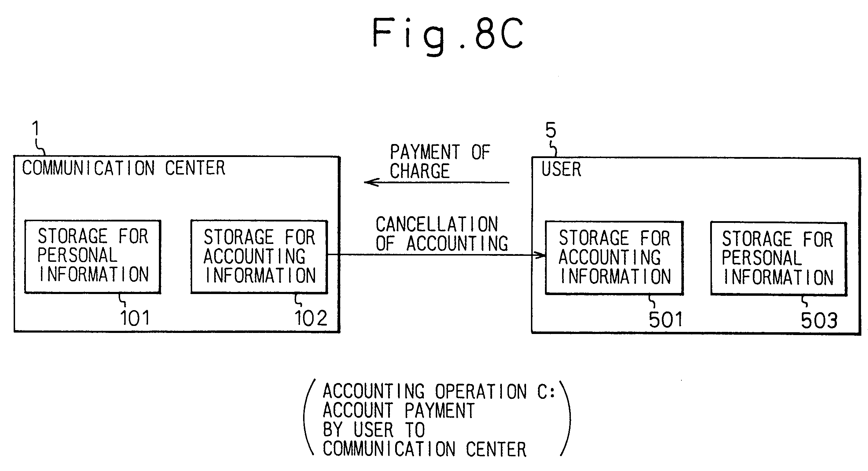

The processes of the accounting operation of the system according to the present invention will be described with reference to Figs. 8A, 8B, and 8C.

In the process shown in Fig. 8A, the user equipment 5 transmits an order to purchase goods or services to a seller equipment. The method of the transmission is, for example, by telephone, by mail, and the like, but is not limited to specific methods. The state of a storage is made to be the write-enabled state. The seller equipment informs the receipt of the purchase order to the communication center equipment 1. The communication center equipment transmits the data of the content of the accounting information storage to the storage for accounting in the user equipment and causes the user equipment to record the transmitted data. In some cases, a seller equipment is operated as the communication center equipment as well as the seller equipment.

In the process shown in Fig. 8B, the user equipment 5 adds the content of the storage for the personal information to the content of the storage for the accounting to produce the sum data, and transmits the sum data to the communication center equipment. The communication center equipment compares by the comparator the transmitted sum data with the data of the sum of the content of the storage for the personal information and the content of the storage for the accounting information. If the compared data coincide, the communication center equipment transmits the information of the authentication of an authorized user to the seller equipment or the like. Based on this transmission of the information, a transfer of the goods or services is executed.

In the process shown in Fig. 8C, the information of the cancellation of accounting information is transmitted from the communication center equipment to the user equipment, based on the payment of the charge by the user equipment. Based on the transmitted information of the cancellation of accounting information, the user equipment cancels the information of accounting in the storage for accounting. The cancellation of the information of accounting stored in the user equipment after the payment of the charge may be carried out exclusively by the communication center equipment via the communication network.

In the process of accounting, the common personal information are stored in the memory for the personal information. The common information may be an information formed based on the result of the communications between the communication center equipment and the user equipment, information determined based on a predetermined rule without such communication, or the like. It is preferable that a common environment for the communication center equipment and the user equipment, based on the common code for such the two equipments for each transaction, is constituted. One of the concrete means for realizing such common environment is the common possession of an encryption key based on the KPS system. The communications between such the two equipments may be carried out by using the encryption. Under these circumstances, it is possible to prevent the storage for the accounting in the user equipment from being written arbitrarily.

In the process shown in Figs. 8A to 8C, a concrete example of the communication center equipment 1 is a computer. The communication center equipment 1 may be, for example, an unmanned communication center equipment. Also, the communication center equipment 1 may be a private computer of the user equipment or a terminal device of the exclusive use using the information media which is, for example, supplied on lease and finally returned. An example of such information media is a CDROM in which a software including a plurality of programs and data is stored. This may be carried out in the manner that the side of the user equipment borrows a CDROM, purchases only the software which the side of the user equipment selects to purchase, and returns the CDROM.

Also, the communication center equipment 1 may be an equipment of an organization which has been established by the time of a transaction of goods or services, or of a seller of goods or services.

The user equipment 5 may be a general-purpose type private computer of a user equipment, an exclusive terminal device for transaction of goods or services, or an exclusive type or a general-purpose attached device connected with such private computer.

In the storage 101 and 503 for the personal information, common information is stored. In the storage 102 for the accounting information, the information which is previously set by the communication center equipment is stored. It is desirable that the information which is previously set by the communication center equipment is secret to the user, a third party, or the like. The user equipment cannot, as a rule, exclusively tamper with any region of the storage for accounting. These regions may be some region of the storage of the general purpose computer of the user equipment, such as a floppy disk device, a hard disk device, an optical disk, or the like. Such regions are regions which the user equipment cannot exclusively acknowledge, or a region into which the data constituted by the encrypted data which cannot be decrypted by the user equipment, even if the user equipment could acknowledge the existence of the region, is stored. The gate 502 of the user equipment controls allowableness or non-allowableness of the writing into the storage 501 for accounting.

An example of the processes by which the operations of the accounting is carried out by using a CDROM will be described. In the user equipment, a CDROM is purchased and connected to the private computer, and the software for the communication center equipment is read from the CDROM and causes the private computer to execute the software for the communication center equipment. The user equipment designates a desired software. The storage for accounting is in the condition to allow the writing of the software for the communication center equipment. The software for the communication center equipment causes the storage for accounting to store the accounting data.

In the next step, the software for the communication center equipment compares the data of the sum of the personal information and the accounting information in the communication center equipment and the data of the sum of the personal information and the accounting information to authenticate that the user equipment is an authorized one. If it is authenticated as an authorized one, the software for the communication center equipment reads necessary software from the CDROM and stores the read software in the storage in the user equipment. The user equipment receives a data of a receipt of a payment after the payment of the charge, inputs the data of the receipt in the routine of the cancellation of the storage of the data of the accounting to execute the routine of the cancellation to cancel the information of the accounting. After the cancellation is executed, the routine of the cancellation of the storage of the accounting is cancelled.

## Claims

1. A system of authentication and a system of transaction incorporating such authentication system for goods or services transactions, characterized in that tamper-proof or secret regions are provided in the data stored in an equipment to be authenticated, an optional information supplied from an authenticating equipment to an equipment to be authenticated or an agreement settled between an authenticating equipment and an equipment to be authenticated is stored during a predetermined period in the tamper-proof or secret regions, and a return data including such optional data, a data based on such optional data, or a data based on such agreement is supplied to the authenticating equipment.

2. A system according to claim 1, wherein a request signal and optional information is supplied from the authenticating equipment to the equipment to be authenticated, a return data and a data based on the request signal is supplied from the equipment to be authenticated to the authenticating equipment, and the optional information and the return data are compared in the authenticating equipment.

3. A system according to claim 1, wherein a request signal is supplied from the authenticating equipment to the equipment to be authenticated, a return data based on the agreement and a data based on the request signal are supplied from the equipment to be authenticated to the authenticating equipment, the data based on the agreement and the return data are compared in the authenticating equipment.

4. A system according to claim 1, wherein, when goods or services are provided by the authenticating equipment which supplies goods or services to the equipment to be authenticated which receives the goods or the services, the optional information or the data based on the agreement is stored in the tamper-proof or secret region in the data stored in the equipment to be authenticated.

5. A system according to any of claims 1 to 4, wherein a communication encrypted by an encryption key is carried out between the equipment to be authenticated and the authenticating equipment, and an authentication and a transaction are executed under the condition of the common possessions of the encryption key by the equipment to be authenticated and the authenticating equipment.

6. A system of authentication, characterized in that a secret algorithm is stored in an authenticating equipment, an intrinsic identifier of its own, a secret algorithm, and an intrinsic identifier of the authenticating equipment are stored in an equipment to be authenticated, in a process of authentication the identifier of the authenticating equipment is applied to a secret algorithm of its own to produce an information possessed in common with the authenticating equipment on the side of the equipment to be authenticated, and in a process of authentication the identifier supplied by the equipment to be authenticated or acquired indirectly is applied to a secret algorithm of its own to produce an information possessed in common with the equipment to be authenticated on the side of the authenticating equipment.

7. A system according to claim 6, wherein the secret algorithm held in each of the equipment to be authenticated and the authenticating equipment is produced by applying the identifier of its own to an algorithm for producing a secret algorithm.
